# EUROPÄISCHE PATENTANMELDUNG

(11) **EP 0 955 776 A1**
(43) Veröffentlichungstag der Anmeldung: **10.11.1999**
(21) Anmeldenummer: 98108306.6
(22) Anmeldetag: 07.05.1998
(51) Int. Cl.: H04N 7/15

(54) **Virtueller Meetingpoint**

(71) Anmelder: Biggel, Emil Josef, Metro Manila (PH)
(72) Erfinder: Biggel, Emil Josef, Metro Manila (PH)
(74) Vertreter: Troll, Thomas

(57) **Zusammenfassung**

Die Erfindung 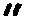 **Virtueller Meetingpoint**" ermöglicht eine neue Form der Online - Kommunikation auf dem Gebiet der Computertechnologie. Über eine Vielzahl durch einen Zentralcomputer angesteuerte mit Eingabegeräten versehene Computer, die über eine Videowand die Daten ausgeben, besteht die Möglichkeit gleichzeitig an eine Vielzahl von Orten, an denen die Erfindung aufgestellt ist, Informationen zu versenden bzw. zu empfangen.

## Beschreibung

Die Erfindung 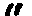 **Virtueller Meetingpoint**" hat als Hauptkomponete **Videowände**, bestehend aus mehreren Einzelmonitoren, die über einen Computer gesteuert werden. Dieser Computer ist wiederrum über Internet oder ein sonstiges Netzwerk mit einen Zentralcomputer verbunden. Über den Zentralcomputer werden diese Videowände kontrolliert und gespeist. Die gesamte Kommunikation ist online. Die Wartungs- und Serviceüberwachung erfolgt ebenfalls online.

An den jeweiligen Videowänden sind Kameras angebracht, über die Aufnahmen gemacht werden, die in das Netz eingespeist werden und weiter übertragen werden können zu anderen Videowänden.

Auf der Rückseite der jeweiligen Videowand befinden sich Monitore mit Eingabetastaturen, die mit dem Computer verbunden sind. Über den Zentralcomputer werden Mailboxen eingerichtet. Über die Eingabetastaturen kann von der jeweiligen Videowand aus kommuniziert werden.

Auf der Oberseite der jeweiligen Videowand befindet sich ein Leuchtschriftband, das ebenfalls über den Computer angesteuert wird. Über diese Leuchtschriftband werden Informationmen wie Datum, Uhrzeit und E-Mail-Nachrichten, Online Wetterbericht, etc. angezeigt.

An der Unterseite der jeweiligen Videowand befinden sich als Audioteil Lautsprecherboxen über die Online-Nachrichten mündlich wiedergegeben werden können.

## Patentansprüche

1. Netzwerk aus Videowänden bestehend aus mehreren Einzelmonitoren,
dadurch gekennzeichnet, daß
sie über je einen Computer angesteuert werden, der über Internet oder ein sonstiges Netzwerk mit einem Zentralcomputer verbunden ist und von diesem kontrolliert und gespeist wird.

2. Netzwerk aus Videowänden nach Anspruch 1
dadurch gekennzeichnet, daß
an der jeweiligen Videowand eine mit dem Computer verbundene Kamera angebracht ist, über die Aufnahmen in das Netz eingespeist werden können.

3. Netzwerk aus Videowänden nach den Ansprüchen 1 und 2
dadurch gekennzeichnet, daß
auf der Rückseite der Videowände über mit den jeweiligen Computer verbundene Tastaturen und Monitore Daten in das Netz eingespeist werden können.

4. Netzwerk aus Videowänden nach den Ansprüchen 1, 2 und 3
dadurch gekennzeichnet, daß
auf der Oberseite der jeweiligen Videowand ein mit dem jeweiligen Computer verbundenes Leuchtschriftband zur Ausgabe von Informationen angebracht ist.
5. Netzwerk aus Videowänden nach den Ansprüchen 1, 2 und 3
dadurch gekennzeichnet, daß
auf an der Unterseite der jeweiligen Videowand mit dem Computer verbunde Lautsprecher als Audiobauteil angebracht sind.
